Europäisches Patentamt

European Patent Office

Office européen des brevets

(11) Publication number: **0 169 149**
A2

(12) # EUROPEAN PATENT APPLICATION

(21) Application number: 85401491.7

(22) Date of filing: 19.07.85

(51) Int. Cl.⁴: **G 01 V 1/00**

(30) Priority: 19.07.84 ZA 845569

(43) Date of publication of application: 22.01.86
Bulletin 86/4

(84) Designated Contracting States: **AT BE DE FR GB**

(71) Applicant: **GEOFEX LIMITED, 4th Floor,
Randhill 104 Bordeaux Drive, Randburg (ZA)**

(72) Inventor: **Millat, Robert, 18, rue de Palaiseau,
F-91120 Villebon Sur Yvette (FR)**

(74) Representative: **Peuscet, Jacques et al, Cabinet
Peuscet 3, Square de Maubeuge, F-75009 Paris (FR)**

(54) A method of contouring a geological surface using seismic techniques.

(57) The invention concerns a method of contouring comprising defining an area above that which it is desired to survey, laying out the detectors at traces placed along opposite portions of the periphery of the area, and then operating the wave source at sequential shot points along the remaining portions of the periphery.

A METHOD OF CONTOURING A GEOLOGICAL SURFACE USING SEISMIC TECHNIQUES

This invention relates to methods of contouring a geological surface using seismic techniques.

Methods of contouring incorporating seismic surveying comprise obtaining data by utilising a shock wave source that is located at a "shot point" and a signal receptor located at a position known as a "trace" that detects the return signal which is a shock wave reflected by a stratum or strata in the medium being surveyed. The time lapse between the initiation of the shock wave and the detection of the return signal provides information that permits calculations to be made which give an indication of the depth of the stratum being surveyed.

According to the present invention there is provided a method of contouring including the steps of defining an area above that which it is desired to survey, laying out the detectors at traces placed along opposite portions of the periphery of the area, and then operating the wave source at sequential shot points along the remaining portions of the periphery. Preferably the periphery is divided into at least four portions, the shot points and traces being located on alternate portions of the periphery.

Preferably the periphery is defined by straight lines and preferably the area is a square.

The distance at which the traces are located apart is preferably the same as that at which the shot points are located.

2

The source is preferably constituted at each shot point by explosive device means. Preferably a number of explosions are actuated at closely spaced positions at each shot point.

Other sources of such vibrations such as drop weights, or vibrator trucks etc. may also be utilized.

The detectors are preferably geophones. Conveniently there may be more that one geophone at each trace.

An embodiment of the invention will now be described with reference to the accompanying sketch plan.

In order to contour (or map) a coal bearing area, the ground is divided into a series of one hectare square units 10 having sides of one hundred metres, the sides of which are constituted by the survey lines of the area. At one pair of opposite sides 12 (the trace lines) eleven traces 14 are located. The first trace 14a is located at one end of each trace line and the remaining traces are located at ten metre intervals.

The other pair of sides (the shot point lines) 16 have eleven shot points 18 at the same relative locations at the traces.

At each trace there is provided detector means comprising one or more geophones. The number and location of the geophones at each trace is determined by routine experimentation in dependance upon the medium being surveyed as will be appreciated by

3

those skilled in the art.    Typically ten geophones may be provided at each trace although more or less may be used as is required and as is revealed by the experiments abovementioned.

At each shot point there is a source comprising one or more cartridges may be provided located respectively in one or more shot holes.  The power of these cartridges may vary as desired in dependence of the characteristics of the medium being surveyed. The cartridges may contain say 100 gms to 200 gms explosive.  The cartridges at each shot point are connected and arranged so that they all explode simultaneously.  The arrangement of shot holes should be symmetrically arranged along the shot point line.  Again the number and disposition of the shot holes is determined by routine experiment as will be appreciated by those skilled in the art.  Naturally once the number and disposition of geophones and the shot holes (and explosives) at the traces and shot points has been determined, then such number and disposition will be identical for all such traces and shot points.

In use, the detector means at the first trace 14a is removed and the source at that location is actuated. The detector means determine the reflected waves in known manner.  The detector means at this trace is now replaced and the remaining sources are fired until the last source at the other trace line is about to be fired.  It will be appreciated that this source will be co-incide in location with the last trace 14b. The detector means at this trace is removed and the last source is fired.

The results detected at the various traces are now processed in a computor and a wave formation will emerge that will enable an accurate survey of the area to emerge and the necessary contour of the area can be made, also by the computor. This survey will give with great accuraccy the depths of the various media and also the fault lines.

It will be noted that apart from the movement of the detector means at the first and last traces, once the detector means have been set up, no further adjustment of the traces is required. Consequently time in the field is considerably reduced as compared to seismic surveying methods known to us and now used.

It will also be noted that this arrangement is a single cover system where the reflection from each common depth point is detected once only.

It will be appreciated that the reason why the detector means at the above mentioned traces have to be moved is to protect them from damage by the explosions due to the shots being fired so close to them.

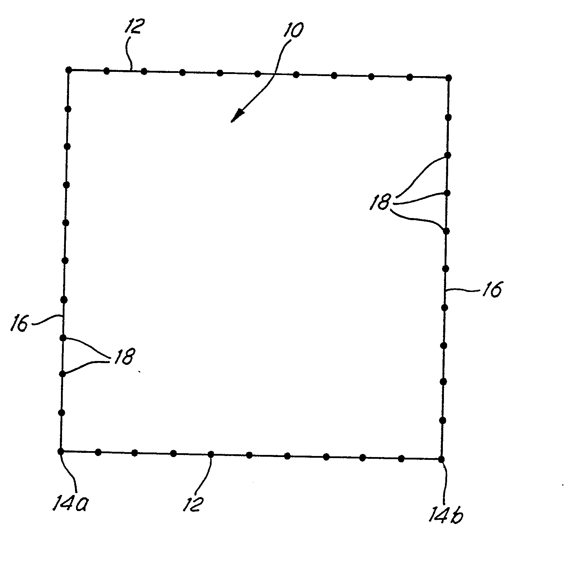

The invention is not limited to the precise details hereinbefore described and illustrated in the drawing. For example,

5

the area to be surveyed may be bound by a quadrilateral which is not a square or indeed it may be bound by a four sided figure having concave (as viewed from the centre of the area) sides. Other bounding areas can be used desired and giving total coverage. Such bounding areas normally have an order of symetry which is four or multiples of four. The size of the area may vary as desired.

If desired, a preliminary detection operation can take place. In this operation, the geophones can be set at the shot points and two extra shot holer are provided respectively in continuations at each end of each shot line and spaced one unit away from each shot line. First and second explosions are caused at these extra shot holes and the appropriate measurements made. Thereafter, the geophones are returned to their appropriate positions as mentioned above and the operation continued in the manner described above.

CLAIMS:- 6

1  A method of contouring comprising defining an area above that which it is desired to survey, laying out the detectors at traces placed along opposite portions of the periphery of the area, and then operating the wave source at sequential shot points along the remaining portions of the periphery.

2  A method as claimed in claim 1 wherein the periphery is divided into at least four portions, the shot points and traces being located on alternate portions of the periphery.

3  A method as claimed in claim 1 or claim 2 wherein the periphery is defined by straight lines

4  A method as claimed in claim 3 wherein the area is a square.

5  A method as claimed in any one of the preceding claims wherein the distance at which the traces are located apart is the same as that at which the shot points are located.

6  A method as claimed in claim 1 or claim 2 wherein the source is constituted at each shot point by explosive device means.

7  A method as claimed in claim 1 or claim 2 wherein a number of explosions are simultaneously actuated at closely spaced positions at each shot point.

8   A method as claimed in claim 1 or claim 2 wherein the detectors are geophones.

9   A method as claimed in claim 1 or claim 2 wherein there are more that one geophone at each trace.

0169149

1/1